Europäisches Patentamt

European Patent Office

Office européen des brevets

(11) Veröffentlichungsnummer: **0 442 456 A1**

## (12) EUROPÄISCHE PATENTANMELDUNG

(21) Anmeldenummer: 91101983.4

(22) Anmeldetag: 13.02.91

(51) Int. Cl.5: **B23B 31/40**

(30) Priorität: 16.02.90 DE 4004819

(43) Veröffentlichungstag der Anmeldung:
21.08.91 Patentblatt 91/34

(84) Benannte Vertragsstaaten:
AT BE CH DE DK ES FR GB GR IT LI LU NL SE

(71) Anmelder: **Schmidt, Claus**
**Wilhelmshofstrasse 34**
**W-7120 Bietigheim-Bissingen(DE)**

(72) Erfinder: **Schmidt, Claus**
**Wilhelmshofstrasse 34**
**W-7120 Bietigheim-Bissingen(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) Spanndorn.

(57) Die Erfindung betrifft einen Spanndorn für Werkzeugmaschinen mit einer Mehrzahl von radial ausgerichteten Spannkörpern (14), die jeweils mit einer ebenen Fläche (64) versehen sind und sich mit dieser Fläche (64) auf einer zugehörigen Stützfläche (62) eines im Querschnitt polygonalen Spannkegels (104) abstützen, gegenüber welchem die Spannkörper (14) zur Erzeugung einer radialen Spannbewegung in axialer Richtung durch einen Zugkörper (156) verschiebbar sind, wobei die Spannkörper (14) jeweils mit einem radial ausgerichteten Vorsprung (142) zur formschlüssigen Mitnahme bei der Axialbewegung ausgebildet sind. Um einen Rundlauf mit einer Genauigkeit von weniger als $10^{-2}$ mm einzuhalten sind die Spannkörper (14) in radialen, zur Vorderseite offenen Aufnahmen (92) eines Spannkopfes (12) angeordnet, der mit einer ringförmigen Nut (140) zur Aufnahme der Vorsprünge (142) der Spannkörper (14) versehen und mit dem Zugkörper (156) durch eine schnell lösbare Verbindung (Bajonettverschluß) verbindbar ist. Der Spannkopf (12) ist in seiner Gebrauchsstellung durch eine entriegelbare Verdrehsicherung gegen Verdrehung gehalten.

FIG.2

Die Erfindung betrifft einen Spanndorn für Werkzeugmaschinen mit einer Mehrzahl von radial ausgerichteten Spannkörpern, die jeweils mit einer ebenen Fläche versehen sind und sich mit dieser Fläche auf einer zugehörigen Stützfläche eines im Querschnitt polygonalen Spannkegels abstützen, gegenüber welchem die Spannkörper zur Erzeugung einer radialen Spannbewegung in axialer Richtung durch einen Zugkörper verschiebbar sind, wobei die Spannkörper jeweils mit einem radial ausgerichteten Vorsprung zur formschlüssigen Mitnahme bei der Axialbewegung ausgebildet sind.

Spanndorne der eingangs genannten Art dienen dem Einspannen von Werkstücken oder Werkzeugen während der Bearbeitung. Oft stützen sie nicht nur die Bearbeitungskräfte ab, sondern bringen außerdem das Werkstück oder Werkzeug selbständig beim Spannvorgang in eine bestimmte, zur einwandfreien Bearbeitung erforderliche Lage. Ein Spanndorn ist stets für verschiedene Formen und Abmessungen von Werkstücken oder Werkzeugen innerhalb eines bestimmten Bereiches verwendbar. Auf Dornen werden beim Drehen und Außenrundschleifen Werkstücke in ihrer vor- oder fertigbearbeiteten Bohrung gespannt. Die Spannkraft wirkt radial von innen nach außen. Der Spanndorn hat mehrere, gleichmäßig über den Umfang verteilte Spannkörper, die radial verstellbar sind. Die bekannten Spanndorne haben eine relativ geringe Rundlaufgenauigkeit.

Ausgehend von dem obigen Stand der Technik liegt der Erfindung die **Aufgabe** zugrunde, einen gattungsgemäßen Spanndorn so weiterzubilden, daß ein Rundlauf mit einer Genauigkeit von weniger als $10^{-2}$ mm eingehalten werden kann.

Diese Aufgabe wird erfindungsgemäß dadurch gelöst, daß die Spannkörper in radialen, zur Vorderseite offenen Aufnahmen eines Spannkopfes angeordnet sind, der mit einer ringförmigen Nut zur Aufnahme der Vorsprünge der Spannkörper versehen und mit dem Zugkörper durch eine schnell lösbare Verbindung (Bajonettverschluß) verbindbar ist, und daß der Spannkopf in seiner Gebrauchsstellung durch eine entriegelbare Verdrehsicherung gegen Verdrehung gehalten ist.

Der erfindungsgemäße Spanndorn besteht somit aus einem Spannkopf mit radial ausgerichteten Schlitzen, deren einander zugekehrte Innenwände parallel zueinander verlaufen und auf die Dicke der Spannkörper abgestimmt sind. Die Spannkörper können sich radial nach innen bzw. nach außen bewegen. Da die Flächen eben sind und mit den Stützflächen in einer Ebene liegen, ist sichergestellt, daß die einander zugekehrten Flächen über maximale Flächen miteinander in Druckverbindung stehen. Die Abnutzung der Flächen und der Stützflächen ist daher minimal. Alle auf die Spannkörper wirkenden Kräfte sind daher radial ausgerichtet.

Weitere erfindungsgemäße sowie zweckmäßige und vorteilhafte Ausgestaltungen der Erfindung gehen aus den Unteransprüchen hervor.

Ein Ausführungsbeispiel ist in der Zeichnung schematisch dargestellt und wird im folgenden näher erläutert. Es zeigen:

| Fig. 1 | eine perspektivische Ansicht eines Spanndornes; |
|---|---|
| Fig. 2 | einen von einem Spindelkopf getragenen Spanndorn im Längsschnitt; |
| Fig. 3 | den in Fig. 2 dargestellten Spindelkopf mit einer Entriegelungsvorrichtung; |
| Fig. 4 | eine Stirnansicht des in Fig. 2 dargestellten Spindelkopfes; |
| Fig. 5 | einen Querschnitt gemäß der Schnittlinie V-V in Fig. 2 und |
| Fig. 6 | einen Querschnitt gemäß der Schnittlinie VI-VI in Fig. 2. |

Der in den Figuren dargestellte Spanndorn 10 umfaßt einen Spannkopf 12, der radial ausgerichtete und mit einem Stützflächen 62 aufweisenden Spannkegel 104 zusammenarbeitende Spannkörper 14 mit Flächen 64 (vgl. Fig. 6) hat. Die Stützflächen 62 sind als ebene Abschnitte des sich zu seinem freien Ende hin verjüngenden Spannkegels 104 ausgebildet, die mit den zugeordneten Flächen 64 in einer Ebene liegen.

Die lamellenartigen Spannkörper 14 haben einen annähernd rechteckförmigen Querschnitt mit Außenseiten 26 und Stirnseiten 38. Die Außenseiten 26 der Spannkörper 14 stehen mit einem Werkstück 126 in Druckverbindung, während die Stirnseiten 38 zum einen aus dem Spanndorn 10 herausragen und zum anderen dem Innenraum des Werkstückes 126 zugekehrt sind. Die lamellenartigen Spannkörper 14 sind in radial im Spannkopf 12 angeordneten Aufnahmen 92 gelagert. Die Aufnahmen 92 weisen Erweiterungen auf, welche als ringförmige Ausnehmung im Spannkopf 12 ausgebildet sind. In diesen Erweiterungen sind elastisch verformbare, die Spannkörper 14 mit dem Spannkopf 12 verbindende Haltekörper 80 aus Gummi oder Kunststoff eingesetzt, so daß die Haltekörper 80 bestrebt sind, die Spannkörper 14 radial nach innen zu versetzen.

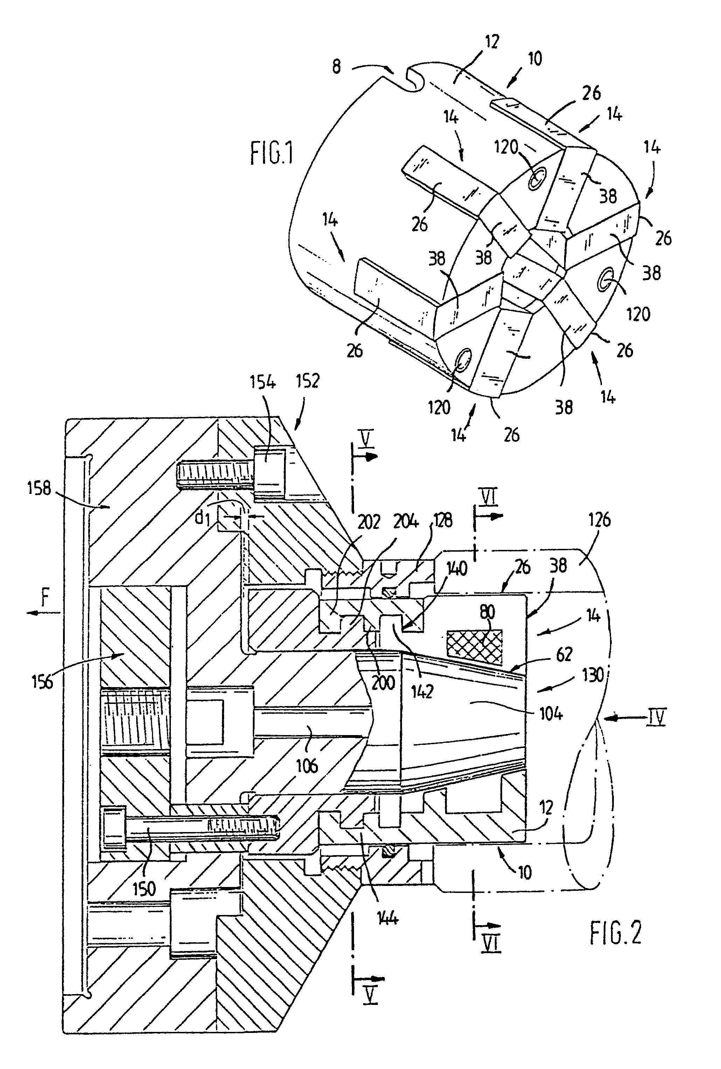

Die in die zur Innenseite des Spannkopfes 12 hin offenen Aufnahmen 92 eingesetzten Spannkörper 14 sind mit dem Spannkopf 12 über Kupplungselemente verbindbar. Die Kupplungselemente sind einerseits als radial an den Spannkörpern 14 angeordnete Vorsprünge 142 und andererseits als im Spannkopf 12 ausgeführte Nuten 140 ausgebildet. Wie insbesondere aus Fig. 2 zu erkennen ist, greifen die Vorsprünge 142 der Spannkörper 14 in die korrespondierenden Nuten 140 des Spannkopfes 12. Die Nuten 140 sind radial nach innen offen und ergeben eine Ringnut, in welche die Vorsprünge 142 der Spannkörper 14 eingehängt sind. Durch die zwischen den einzelnen Spannkörpern 14 angeordneten Haltekörper 80 sind die Spannkörper 14 in dem Spannkopf 12 verspannt. Um durch das Einhängen der Vorsprünge 142 in die Nuten 140 die Genauigkeit der Einstellung nicht negativ zu beeinflussen, ist die radiale Tiefe der Nuten 140 auf den Arbeitsbereich der Spannkörper 14 abgestimmt.

Der Spannkopf 12 weist weiterhin eine radiale Nut 144 auf, die durch radiale Vorsprünge 200 und 202 an dem dem Werkstück 126 abgewandten Ende gebildet ist. In diese Nut 144 greifen am Zugkörper 156 angeordnete korrespondierende Vorsprünge 204, welche zusammen mit den Vorsprüngen 202 einen Bajonettverschluß bilden, der beim Verdrehen des Spanndorns 10 relativ zu dem Zugkörper 156 lösbar ist. Beim Verdrehen des Spanndorns 10 gelangen die Vorsprünge 204 des Zugkörpers 156 in zwischen den Vorsprüngen 202 angeordnete Ausnehmungen, so daß der Spanndorn 10 von dem Spannkegel 104 abgezogen werden kann. Ein selbständiges Lösen des Spanndorns 10, beispielsweise durch die Trägheitskraft des Spanndorns 10 beim Abbremsen, wird dadurch vermieden, daß die Stützflächen 62 auf den ebenen Flächen 64 des Spannkegels 104 aufliegen. Zum Lösen des Spanndorns 10 müssen die Stützflächen 62 in den Bereich der bogenförmigen Abschnitte des Spannkegels 104 zwischen den ebenen Flächen 64 gedreht werden, wobei die von den Haltekörpern 80 festgehaltenen Spannkörper 14 radial nach außen gedrückt werden. Hierzu muß die von den Haltekörpern 80 aufgebrachte Kraft überwunden werden.

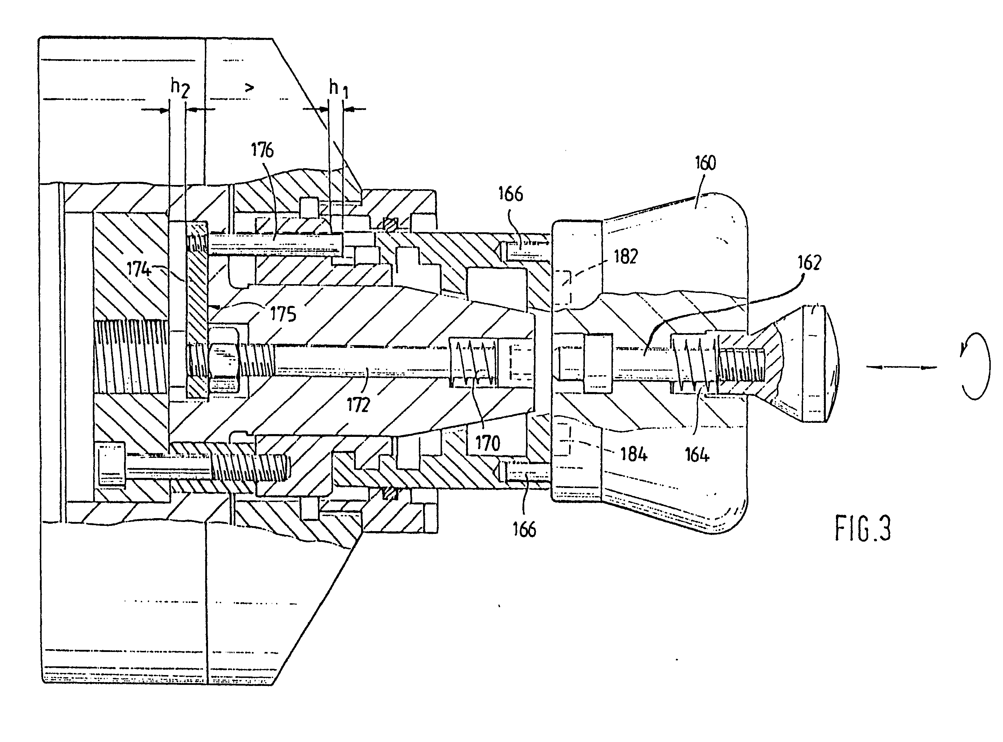

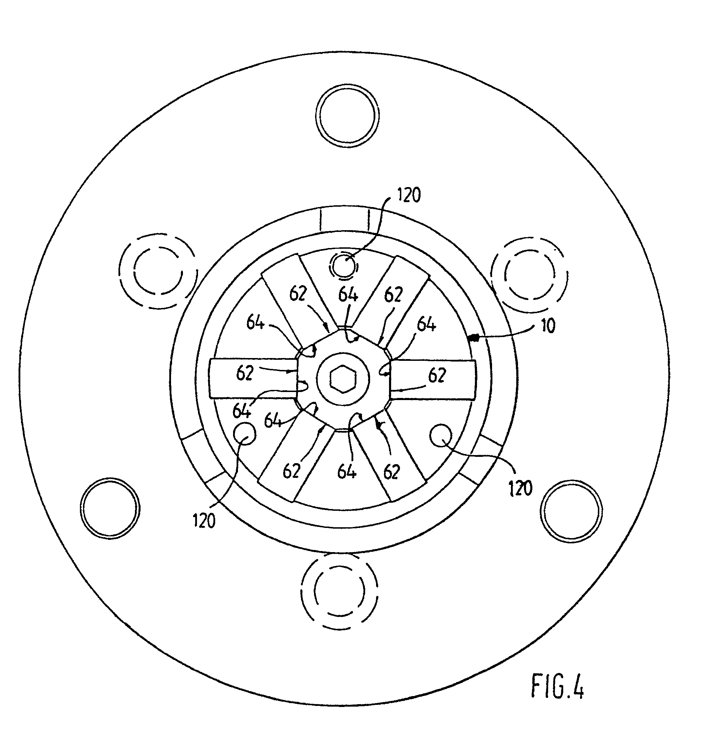

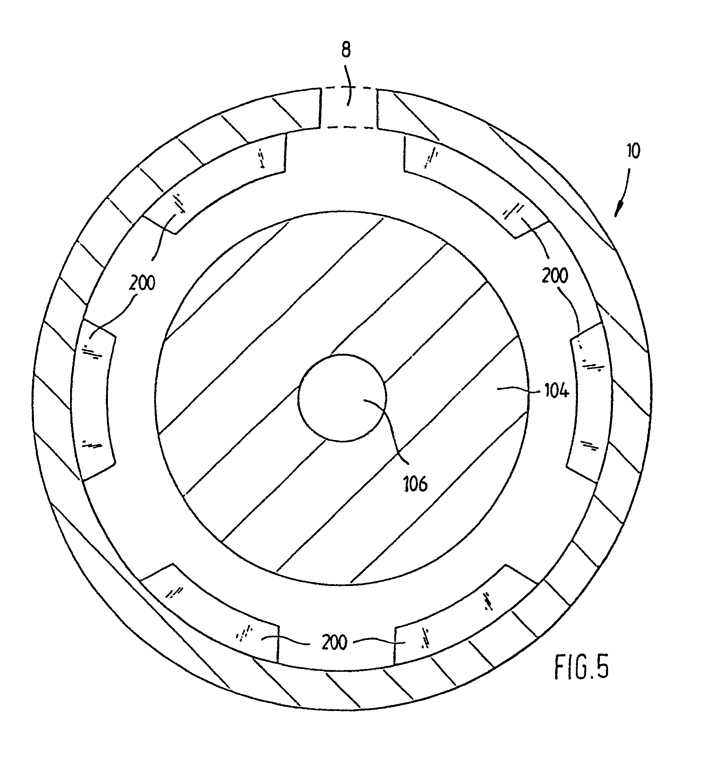

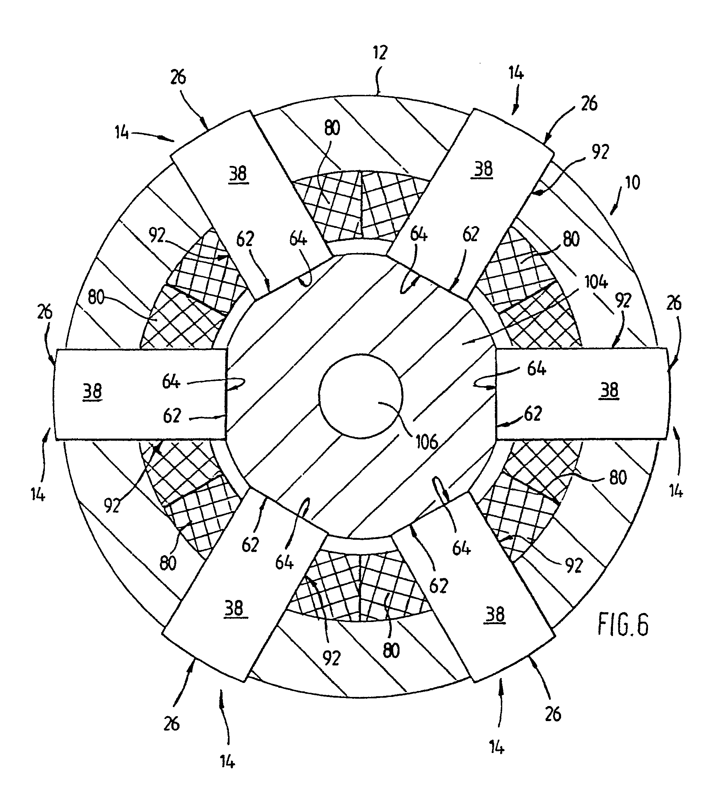

Zum Lösen des Spanndorns 10 ist eine Entriegelungsvorrichtung 160 vorgesehen, mit der die zum Verschieben der von den Haltekörpern 80 gehaltenen Spannkörper 14 aufzuwendende Kraft erzeugbar ist (siehe Fig. 3).

In dem Spannkegel 104 ist eine axiale Bohrung 106 ausgebildet, an die sich eine in radialer Richtung des Spannkegels 104 erstreckende Ausnehmung 175 anschließt. In der Bohrung 106 und der Ausnehmung 175 ist ein Betätigungsmechanismus angeordnet, der einen in der Bohrung 106 angeordneten Betätigungsbolzen 172 aufweist, welcher mit einem in der Ausnehmung 175 angeordneten Joch 174 drehfest verbunden ist. Ein parallel zu dem Betätigungsbolzen 172 angeordneter Rastbolzen 176 ist an dem Joch 174 befestigt und greift bei auf den Spannkegel 104 aufgesetztem Spanndorn 10 in eine Rastaufnahme 8, welche an dem dem Werkstück 126 abgewandten Ende des Spannkopfes 12 angeordnet ist. Der Rastbolzen 176 sichert den Spanndorn 10 in seiner Arbeitsposition.

Am konischen Ende des Spannkegels 104 ist die Bohrung 106 aufgeweitet; in der Aufweitung ist eine Feder 170 angeordnet, die den Betätigungsbolzen 172 mit dem daran angeordneten Joch 174 und dem Rastbolzen 176 in Richtung des konischen Endes des Spannkegels drückt. Hierdurch wird der Rastbolzen 176 in die Rastaufnahme 8 gedrückt. Der Betätigungsbolzen 172 ist auf einem Arbeitshub $h_2$ in axialer Richtung des Spanndornes bewegbar. Dieser Arbeitshub $h_2$ ist größer als ein Entriegelungshub $h_1$, durch welchen der Rastbolzen 176 aus der Rastaufnahme 8 herausziehbar ist. Demzufolge ist der Arbeitshub $h_2$ größer als die Tiefe der Rastaufnahme 8.

Die Entriegelungsvorrichtung 160 weist einen axial verlaufenden und in die Bohrung 106 eingreifenden Entriegelungsbolzen 162 auf, durch den der Betätigungsbolzen 172 entgegen der Kraft der Feder 170 im Spannkegel 104 verschiebbar ist. Der Entriegelungsbolzen 162 ist mittels einer Druckfeder 164 in der Entriegelungsvorrichtung 160 gelagert. Ferner sind an der Entriegelungsvorrichtung 160 Mitnahmebolzen 166 angeordnet, die in in der Stirnseite des Spanndornes 10 angeordnete, korrespondierende Bohrungen 120 einsetzbar sind. Diese Mitnahmebolzen 166 dienen zur genauen Positionierung der Entriegelungsvorrichtung 160 auf dem Spanndorn 10. Ferner sind neben den Mitnahmebolzen 166 als Haftkörper dienende Magneten 182 angeordnet, die die Entriegelungsvorrichtung 160 lösbar an dem Spanndorn 10 halten.

Ein den Spannkegel 104 und den aufgesetzten Spanndorn 10 haltender Spindelkopf 152 ist mittels Schrauben 154 mit einem Grundkörper 158 verbunden, der an der Spindel einer Drehmaschine befestigt wird. Im Grundkörper 158 sind Bohrungen für Schrauben 150 vorgesehen, durch die der Zugkörper 156 mit dem Bajonettverschluß verbunden ist. Der Zugkörper 156 ist in axialer Richtung des Spannkegels 104 bewegbar, wobei der Hub $d_1$ des Zugkörpers 156 so bemessen ist, daß die Spannkörper 14 entsprechend ihrer Größe maximal ein- und ausgefahren werden können.

Die in die Aufnahmen 92 des hohlzylindrisch ausgebildeten Spanndorns 10 eingesetzten Spannkörper 14 ragen mit ihren Stirnseiten 38 aus dem Spannkopf 12 heraus, so daß auch Werkstücke eingespannt werden können, die nur eine geringe Ausnehmung aufweisen. Ein lagegenaues Einspannen der Werkstücke wird durch einen parallel zu dem Spanndorn 10 am Spindelkopf 152 lösbar befestigten Anschlag 128 erzielt.

**Bezugszeichenliste**

| 8 | Rastaufnahme |
|---|---|
| 10 | Spanndorn |
| 12 | Spannkopf |
| 14 | Spannkörper |

| 26 | Außenseite |
| 38 | Stirnseite |
| 62 | Stützfläche |
| 64 | Fläche |
| 80 | Haltekörper |
| 92 | Aufnahme |
| 104 | Spannkegel |
| 106 | Bohrung |
| 120 | Bohrung |
| 126 | Werkstück |
| 128 | Anschlag |
| 140 | Nut |
| 142 | Vorsprung |
| 144 | Nut |
| 150 | Schraube |
| 152 | Spindelkopf |
| 154 | Schraube |
| 156 | Zugkörper |
| 158 | Grundkörper |
| 160 | Entriegelungsvorrichtung |
| 162 | Entriegelungsbolzen |
| 164 | Druckfeder |
| 166 | Mitnahmebolzen |
| 170 | Feder |
| 172 | Betätigungsbolzen |
| 174 | Joch |
| 175 | Ausnehmung |
| 176 | Rastbolzen |
| 182 | Magnet |
| 200 | Vorsprung |
| 202 | Vorsprung |
| $h_1$ | Entriegelungshub |
| $h_2$ | Arbeitshub |
| $d_1$ | Hub |

## Patentansprüche

1. Spanndorn für Werkzeugmaschinen mit einer Mehrzahl von radial ausgerichteten Spannkörpern (14), die jeweils mit einer ebenen Fläche (64) versehen sind und sich mit dieser Fläche (64) auf einer zugehörigen Stützfläche (62) eines im Querschnitt polygonalen Spannkegels (104) abstützen, gegenüber welchem die Spannkörper (14) zur Erzeugung einer radialen Spannbewegung in axialer Richtung durch einen Zugkörper (156) verschiebbar sind, wobei die Spannkörper (14) jeweils mit einem radial ausgerichteten Vorsprung (142) zur formschlüssigen Mitnahme bei der Axialbewegung ausgebildet sind,
**dadurch gekennzeichnet,**
daß die Spannkörper (14) in radialen, zur Vorderseite offenen Aufnahmen (92) eines Spannkopfes (12) angeordnet sind, der mit einer ringförmigen Nut (140) zur Aufnahme der Vorsprünge (142) der Spannkörper (14) versehen und mit dem Zugkörper (156) durch eine schnell lösbare Verbindung (Bajonettverschluß) verbindbar ist, und daß der Spannkopf (12) in seiner Gebrauchsstellung durch eine entriegelbare Verdrehsicherung gegen Verdrehung gehalten ist.

2. Spanndorn nach Anspruch 1, dadurch gekennzeichnet, daß die Verdrehsicherung durch einen in eine Rastaufnahme (8) am Spannkopf (12) eingreifenden Rastbolzen (176) gebildet ist, der mit einem entgegen der Kraft einer Feder (170) verschiebbaren Betätigungsbolzen (172) verbunden ist, der in einer Axialbohrung (106) des Spannkegels (104) verschiebbar angeordnet ist.

3. Spanndorn nach Anspruch 1 oder 2, dadurch gekennzeichnet, daß zum Entriegeln der Verdrehsicherung und zum Verdrehen des Spannkopfes (12) eine Entriegelungsvorrichtung (160) mit einen Entriegelungsbolzen (162) und mindestens einem Mitnahmebolzen (166) an die Vorderseite des Spannkopfes (12) ansetzbar ist.

4. Spanndorn nach mindestens einem der Ansprüche 1 bis 3, dadurch gekennzeichnet, daß die Spannkörper (14) mit in Erweiterungen der radialen Aufnahmen (92) des Spannkopfes (12) eingreifenden, die Spannkörper (14) in radialer Richtung nach innen belastenden, elastischen Haltekörpern (80) versehen sind.

5. Spanndorn nach mindestens einem der Ansprüche 1 bis 4, dadurch gekennzeichnet, daß die schnell lösbare Verbindung zwischen dem Spannkopf (12) und dem Zugkörper (156) durch radial ausgerichtete, über den Umfang mit Abstand verteilte Vorsprünge (204) des Zugkörpers (156) und durch mit diesen zusammenwirkende Vorsprünge (202) am Spannkopf (12) in der Art eines Bajonettverschlusses gebildet ist, der durch eine Verdrehung des Spannkopfes (12) um einen vorgegebenen Drehwinkel gegenüber dem Zugkörper (156) lösbar ist.

FIG.1

FIG.2

FIG.3

EP 0 442 456 A1

FIG.4

FIG.5

FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | DE-U-9 001 831  (C. SCHMIDT)<br>* Ansprüche; Figuren *<br>- - - | 1-5 | B 23 B 31/40 |
| A | FR-A-2 212 201  (TOBLER S.A.)<br>* Ansprüche; Figur *<br>- - - - - | 1 | |

| RECHERCHIERTE SACHGEBIETE (Int. Cl.5) |
|---|
| B 23 B |

Der vorliegende Recherchenbericht wurde für alle Patentansprüche erstellt

| Recherchenort | Abschlußdatum der Recherche | Prüfer |
|---|---|---|
| Berlin | 27 April 91 | WUNDERLICH J E |